Europäisches Patentamt

European Patent Office

Office européen des brevets

(19)

(11) Publication number: **0 073 644**
A2

(12) **EUROPEAN PATENT APPLICATION**

(21) Application number: **82304476.3**

(22) Date of filing: **25.08.82**

(51) Int. Cl.³: **G 07 C 9/00**

(30) Priority: **25.08.81 NZ 198170**

(43) Date of publication of application: **09.03.83**
Bulletin **83/10**

(84) Designated Contracting States: **AT BE CH DE FR GB IT
LI LU NL SE**

(71) Applicant: **Aliflex International Limited, 931 Tremaine
Avenue, Palmerston North (NZ)**

(72) Inventor: **Carruthers, Barrie McKay, 940 Mangorei Road
R.D. 1, New Plymouth (NZ)**
Inventor: **Groenestein, Wladimir Iljitsj, 84B Carrington
Street, New Plymouth (NZ)**
Inventor: **Peek, Garry Michael, 4C Whitby Place, New
Plymouth (NZ)**
Inventor: **Slater, Paul, 3 Waterford Place, Palmerston
North (NZ)**

(74) Representative: **Ablewhite, Alan James et al, MARKS &
CLERK 57/60 Lincoln's Inn Fields, London WC2A 3LS
(GB)**

(54) **An electronic identification method and means.**

(57) An electronic identification system comprising an
identification unit (10) and an interrogator unit. The
interrogator unit includes means (11) for emitting light
pulses and receiver means (51) to receive a coded signal
from the identification unit (10). The interrogator also
includes signal verification means (52) to verify that the
coded signal from the identification unit (10) has been
correctly received. The identification unit (10) includes
pulsed light detector means (11), signal processing
means (13) to convert the signal into clock pulses and
storage means (14) for storing an identifying code such
that the code is synchronized out of the storage means
(14) by the clock pulses. The identification unit (10) also
includes transmitter means (16) for transmitting a coded
signal to the receiver means (51), interrogator signal
verification means (R10, C10 and 40) to verify the receipt
of correct interrogation pulses and shut-down means
(37, 41 and 42) to shut-down the identification unit (10)
once a verified interrogate signal ceases to be received
by the identification unit.

An electronic identification method and means

- 1 -

This invention relates to an electronic identification system for use in remotely identifying an object and is particularly, but not exclusively, useful for the identification of animals whether they be moving or stationery.

Animal identification is a necessary part of livestock farming. Identification can be achieved by branding the animal or using an  identification device such as an ear tag. Livestock management schemes are increasingly reliant on the maintenance of data records, however, the quantity of data and controlled recording of such data is extremely complex and time consuming. It has thus been necessary to devise sophisticated identification systems which permits the electronic identification of individual animals and thereby enable  the recording and management of individual animal information to be used for breeding programmes, the maintenance of health records, determination of ovulation and mating cycles, the maintenance of progeny records, production analysis and weighing to name but a few. In addition the electronic identification of each animal permits a central processor to automatically activate mechanical functions such as the operation of equipment in a milking parlour or the automatic signalling of information to a farmer such as alerting the farmer to missing stock, special attention for a particular animal and the like.

Electronic identification systems have thus been proposed whereby a uniquely coded transmitter device attached to or implanted in an animal is interrogated by an interrogator unit. For example it is known to utilize a low frequency inductive loop (usually in a restricted area such as a drafting race, walkway, milking parlour etc.) through which an animal having a coded transmitter in the form of a transponder can pass so that the transponder becomes energised and transmits coded information which identifies the animals. This system has many drawbacks. For example the system is not usually practical with animals such as sheep, it must be used in a set location as it has short range interrogation, is susceptible to electromagnetic noise and RF interference.

It has also been proposed that the interrogation unit be a transmitter which transmits power to a receiver in the identification unit attached to or implanted in the animal. The identification unit incorporates a receiver which upon receiving the interrogation signal activates a coded memory unit which supplies binary coded digital bits of information to a transmitter for transmission to a receiver of the interrogator unit. The identification unit can be powered by an internal power source such as a long life battery and to ensure the battery lasts sufficiently long it is only utilised for the short period of time during which interrogation takes place.  Alternatively it has been proposed to have a passive energy storage unit which derives power from the energy input of the interrogation unit.

Such systems have largely been unsuccessful for a variety of reasons.  For example the systems are invariably complex and costly, only operate at short range and have the known short comings of interference and band usage.  A prime limitation, however, is that life of the power source in the identification unit is limited especially when the unit is being used in an area where RF interference is prevalent as such interference can result in the power source being regularly switched on and off with a consequential drain on the power source.

For electronic identification to be a viable means of identifying animals it must be simple but effective in operation, preferably operating at longer ranges than have hitherto been achieved, it must be long lasting and thus operate with a minimum of drain on the power source, it must provide high security coupled with low error rate and must utilise an identification unit which is small and light enough to be used on all types and sizes of stock.

Broadly in one aspect of the invention there is provided an electronic identification system comprising an identification unit and an interrogator unit, said interrogator unit including means for emitting light pulses and receiver means to receive a coded signal from said identification unit, and signal verification means to verify the coded signal from the identification unit has been correctly received, said identification unit including pulsed light detector means, signal processing means to convert said signal into clock pulses, storage means for storing an identifying code for said identification unit such that said code is clocked out of said storage means by said clock pulses, transmitter means for transmitting a coded signal to said receiver means, signal detector means to detect the coded signal has been received and verified by said interrogator unit and shut down means responsive to said signal detector means to shut down the identification unit once a verified coded signal has been received by said interrogator unit.

The light can be of a frequency in the visible or invisible range and in a preferred form of the invention the light is infra-red, preferably emitted as high powered short duration pulses.

The coded signal producing means of the identification unit preferably comprises a single closed loop shift register which serves as a memory for a unique digital identification number and simultaneously as a transmitter shift register. Preferably the stored information is transmitted from the identification unit by an ultra high frequency FM transmitter.

In the following more detailed description of the invention reference will be made to the accompanying drawings in which:-

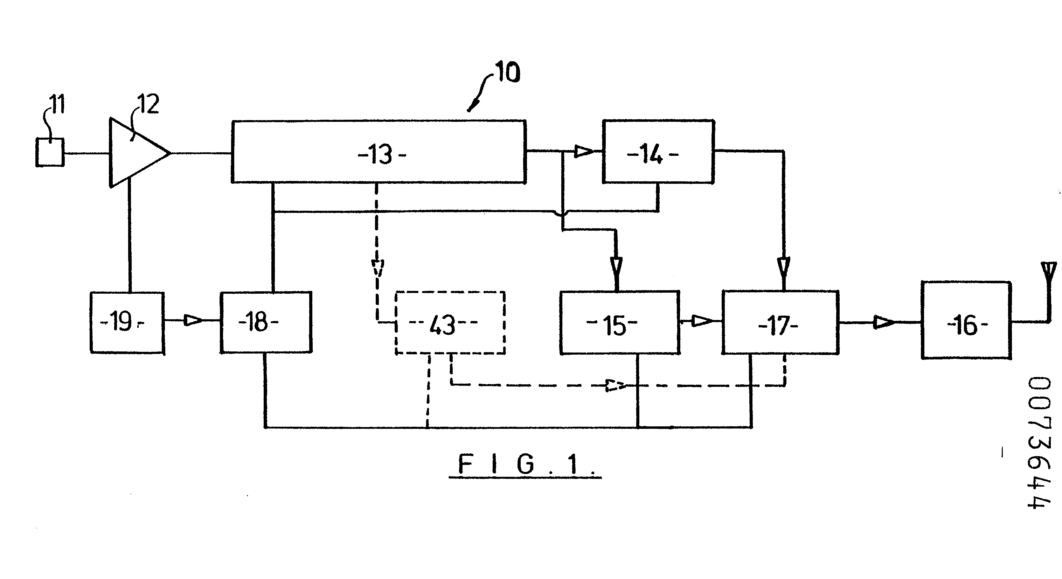

Figure 1 is a block diagram of the components of one form of the identification unit of the electronic identification system according to the invention but with a modification for a second form of the invention shown in dotted detail,

Figure 2 is a circuit diagram of both forms of the identification unit shown in Figure 1,

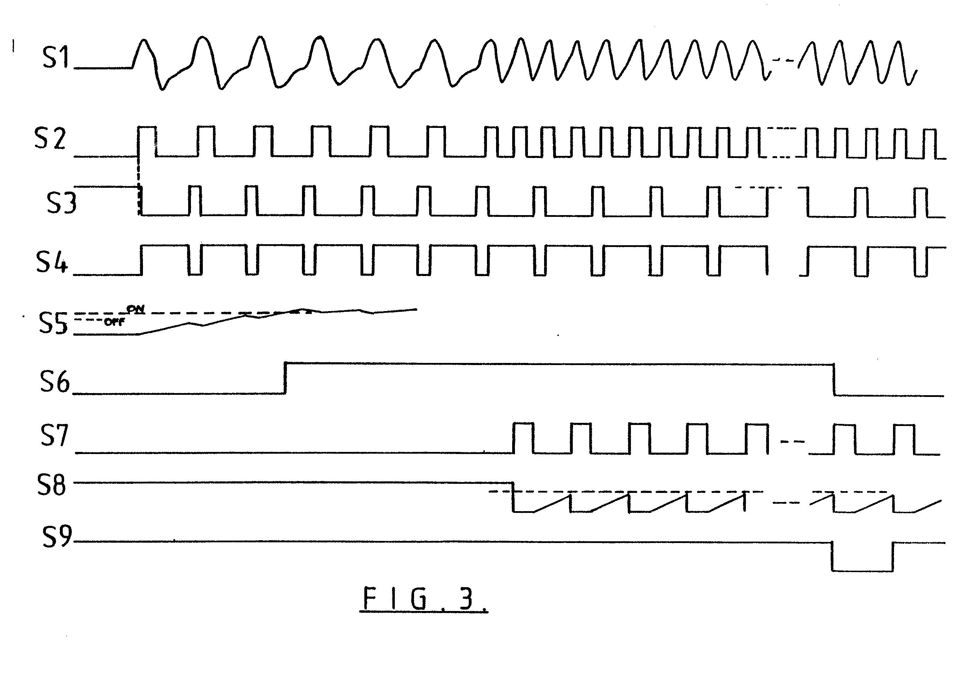

Figure 3 is a diagrammatic representation of waveforms of interrogation and identification signals which appear during various stages of an identification interrogation and transmission, using the second form of the identification unit,

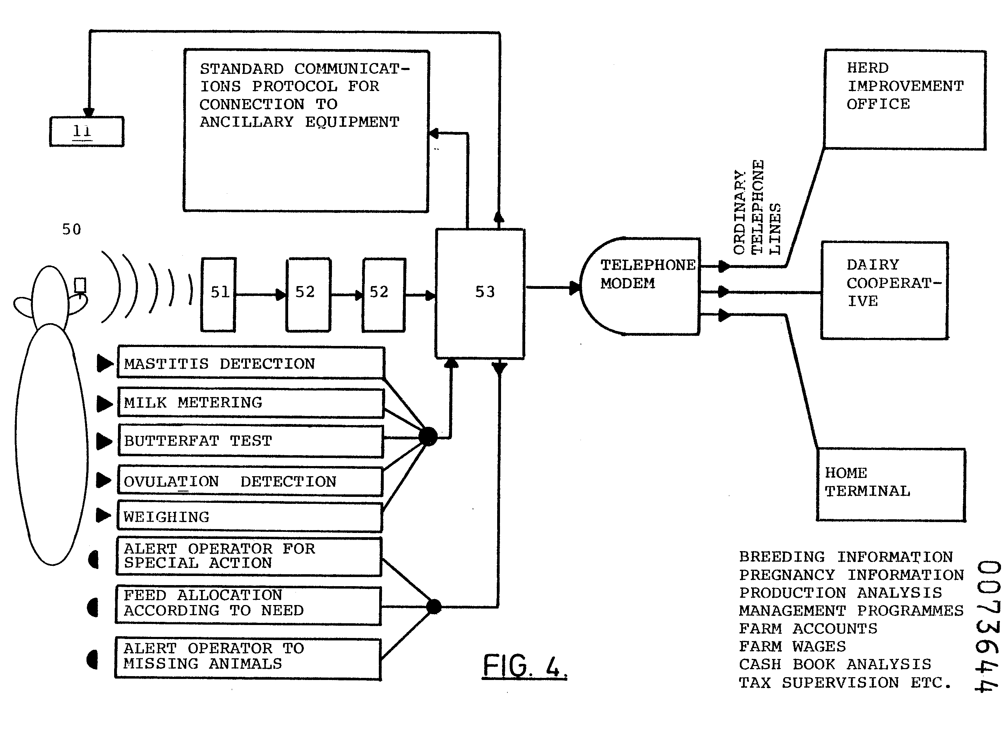

Figure 4 is a block diagram of one form of the interrogator unit of the electronic identification system according to the invention in conjunction with ancilliary equipment, and

Figure 5 is a circuit diagram of an interrogator unit.

Whilst the identification system is primarily designed for use in animal identification, and the following description will deal solely with this type of application, the system can be used in different applications.

In the preferred form of the invention the identification unit or transponder 10 is encapsulated in a tamperproof and moistureproof capsule which is to be embedded in or carried by a device, such as an ear tag 11, for attachment to the animal A. When the capsule is embedded in say an ear tag the tag should preferably be of a tamperproof type.

The interrogation unit 12 uses light as the interrogating medium, said light preferably having a frequency in the infra-red range. The infra-red light is transmitted as high powered short duration pulses. The interrogating medium can, however, be light of any other frequency in the visible or invisible range which is emitted in pulsed form.

The stored information in the identification unit 10 is preferably transmitted on a radio frequency medium preferably from an ultra high frequency FM transmitter. The system thus preferably operates by utilising two different mediums for interrogation and transmission of a uniquely coded identification signal. Multiplexing of the interrogation and identification signals normally required in known systems is thus not necessary, however, such multiplexing is required when the identification medium is also light. The infra-red interrogation signal can be transmitted using a suitable optical or LED array dispersal system as a narrow or wide beam as may be required. Narrow beam transmission has the advantage of being able to selectively interrogate identification units which are placed on animals in say a herd some distance from the interrogator.

Infra-red radiation has the advantage that it is not hazardous and false interrogation of an identification unit by external influences is most unlikely (this being a problem with radio frequency interrogation). Both short and long range interrogation is possible using infra-red radiation. For example by utilising solid state infra-red lasers or xenon ranges of well in excess of fifty yards can be achieved.

The transponder 10 includes a sensor or photodiode 11 suitably protected by narrow band optical filtering techniques. The pulsed signal is amplified by amplifier 12 and passed to a signal processor 13 where the signal is processed by a comparator and monostable. The resultant pulse train is then utilised to clock a memory 14 which holds in store a unique coded data word or number. A signal detector 15 enables a transmitter 16 which is modulated by the pulse train recovered from the memory 14 via the transmit control and modulator 17. The power source is a primary cell 18 but preferably includes a solar cell array 19 which drives the front end amplification and applies a float charge to cell 18.

The coded signal producing means 14 can be of known composition formed by a RAM or ROM memory which jams parallel information into a shift register which feeds the transmitter 16. To avoid complexity of componentary the preferred form of the invention utilizes a single shift register loop. A closed loop shift register serves as both the memory for unique data and simultaneously as the transmitter shift register. In the preferred form, 80 bits of binary information are stored in the shift register but, if required, a shift register storing over or under 80 bits of information can be employed.

The power source 18 in its preferred form is a battery, preferably a silver oxide battery which has long life characteristics. As an alternative arrangement the power source can simply be a solar cell.

An advantage of using a single active shift register is that the electronics in the transponder are simplified. For example, stored data can be readily synchronised with the pulsed interrogator signal bit by bit thus requiring minimum circuitry. The shift register contains stop, start bits, together with check sum information defining the exact length and validity of the identification word. The stored information rotates automatically, synchronised by the

0073644

infra-red strobing pulses. The CMOS circuitry utilized can be made to drive a radio transmitter, infra-red emitter or other radiating medium with equal ease thus providing a choice of the indentification signal medium for various applications.

Another advantage of using the active closed loop shift register is ease of programming. For any electronic identification system to be a viable commercial proposition it must be of a reasonable cost to the end user. Accordingly, transponders must be capable of being mass produced and have relatively simple componentary, to be of low cost, especially to the end user who will need to purchase as many transponders as he has stock. This means that the transponder must be capable of being manufactured and tested at reasonable cost and then programmed as required.

With the transponder employed in the present invention the electronic circuitry is manufactured according to known monolithic techniques, placed in a capsule and embedded in the ear tag or other device. Two slightly light sensitive elements are provided at or near the surface of the tag and these are connected to the shift register in such a way that enabling and inserting of data into the shift register is achieved. The data word is inserted by clocking the transponder by normal means (i.e. infra-red strobing) and inserting the word via for example concentrated modulated light spot. Alternatively the data word can be inserted by probe, capacity, magnetic impulse, voltage impulse or the like. Once programming is completed the inputs, in the disclosed arrangement of light sensitive elements, are destroyed, for example by, heat fused link, or a heat cured conductor etc to prevent reprogramming, thus achieving programming at the last stage of manufacture.

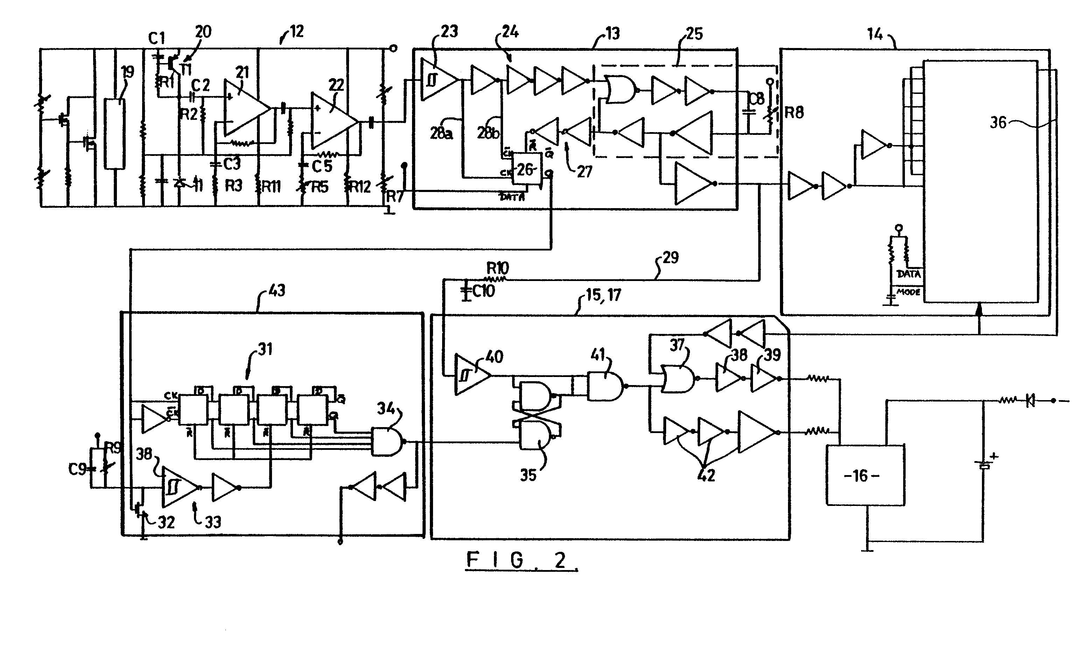

To more particularly describe a preferred form of the transponder reference is made to Figure 2. The photodiode 11, which could be one of the elements of solar cell array 19, is biased by a P buffer network 20 (formed by R1, C1 and T1) to be variably compensated for ambient light shift. The biased network 20 has a time constant structured so that it is unaffected by low frequency components and thereby prevents saturation of photodiode 11. In high ambient light the current requirements of buffer network 20 are met by solar array 19 as indeed is the front end amplification of amplifier 12. The output signal from photodiode 11 passes along line 17 via high pass network R2 and C2 to the input of a first op amp 21. The op amp 21 operates as a band pass amplifier centred on a determined frequency (for the sake of description hereinafter referred to as 5 KHz) as determined by the time constant of R3 and C3. The signal then passes to the input of a second op amp 22 via high pass network R4 and C4. Op amp 22 is also centred on 5 KHz by the time constant of R5 and C5. Op amps 21 and 22 are micropower CMOS amplifiers whose current is set by R11 and R12.

The thus amplified signal passes into the signal processor for conditioning and squaring and is applied to the input of a Schmitt comparator 23 whose threshhold is set by R6 and R7. Comparator 23 has inbuilt hysterisis which filters out unwanted information and eliminates false triggering due to ambient noise variation. The signal passes via delay network 24 to monostable 25 the timing of which is accomplished by time constant of R8 and C8. On receipt of the incoming signal monostable 25 changes state and goes high on output line 29 thereby clocking memory shift register 14. Monostable 25 inhibits the reception of any noise signals which may be present in the incoming signal for a period (say 80%) of the strobing period. Thus the circuit operates as a filter network eliminating troublesome noise pulses by anticipating when a valid pulse is due to arrive and enabling the circuit immediately prior to this occurrence.

The processed signal thus clocks the recirculating shift register 14. The shift register data is re-circulated via line 36 and also presented to the transmit modulator 17 formed by NOR gate 37 and buffers 38 and 39. The clock pulses on line 29 integrated by R10 and C10 feed into Schmitt comparator 40. The time constant of R10 and C10 is such that it switches comparator 40 only in the presence of a continuous stream of pulses exceeding a predetermined number and thus eliminates triggering of the transmitter due to random noise on clock line 29. When the integrated output of R10 and C10 rises above the threshhold of comparator 40 the subsequent high on the output is NANDED via NAND gate 41. The output of NAND gate 41 is suitably buffered via transmit buffers 42 to enable transmitter 16. Accordingly, in absence of valid interrogator signal, such as when the strobed interrogator pulses cease, the transmitter shuts down.

Modulation of the transmitter is achieved by superimposing data information from shift register 14 on the DC component supplied by transmit buffers 42. This has the effect of deviating the transmitter output achieving frequency modulation of the RF carrier in sympathy with data contained within the memory 14. Gate 37 on the data enable line ensures simultaneous shut down of the data line to the transmitter at the time the transmitter enable is shut down by the action of R10,C10 and comparator 40 as described above.

In the second form of the invention the transponder 10 incorporates a pulse detector 43 which detects a secondary pulse stream twice the clock pulse frequency (say 10 KHz). This permits the interrogator unit to transmit a 10 KHz burst when it has correctly read and verified the coded data from the transponder 10 so that it can be positively shut down. This facility eliminates unnecessary battery drain and RF interference.

In this form the signal processor 13 includes a pulse separating flip flop 26 which is held in reset mode by the action of monostable 25 when transponder 10 is in its idling state. The incoming 5 KHz signal will attempt to clock flip flop 26 which is not achieved due to the reset action of monostable 25. Simultaneously the same incoming signal is delayed via delay network 24, monostable 25 and a delay network 27 which delayed signal thus enables flip flop 26 after receipt of clocking pulses via clocking lines 28a and 28b. On receipt of incoming signal the output of monostable 25 changes state and goes high on output line 29 to clock the shift register 14 as previously described. The delay network is thus necessary to ensure flip flop 26 is clocked prior to monostable 25 setting and in turn enabling flip flop 26. The duration of monostable 25 is precisely set to allow a reset to occur prior to the next incoming pulse at 5 KHz. However, in the presence of a 10 KHz signal flip flop 26 is held enabled during clocking of the secondary pulse thereby separating the higher frequency. This is achieved because during the period monostable 25 is fired (80% of 200µ sec) the high on $\bar{R}$ enables flip flop 26. Receipt of the secondary clocking pulses then changes the state of flip flop 26 producing an output at Q. In this manner the incoming 10 KHz burst can be detected.

Further processing of this output is necessary to ensure only a valid turnoff command is accepted. This is achieved by counting a number of separated pulses and ensuring that they arrive reliably for a predetermined period. In the event of a missing pulse being encountered this preset period is re-initiated. Presence of pulses is detected by N buffer 32 charging C9 against the time constant determined by R9 which is set to 300µ sec. Thus a missing pulse will be detected by Schmitt comparator 33 resetting counter 31 which is designed to count 16 consecutive pulses. Counter 31 is a four-stage binary counter clocked by the Q output of flip flop 26. When all four binary counters are high these are NANDED in the four input NAND gate 34 resulting in the resetting of a transmitter RS flip flop 35.

The high on the output of comparator 40 in conjunction with the high output of the RS flip flop 35 is NANDED in NAND gate 41. As previously described the output of NAND gate 41 is suitably buffered by buffers 42 to enable transmitter 16.

Transmitter 16 can be of any suitable design but in the preferred form of the invention the transmitter comprises a single transistor free running UHF oscillator with its frequency controlled by a microstripline element which, in accordance with normal design criteria known to those skilled in the art, is designed for high stability and efficiency and is configured in such a way as to radiate sufficient energy for the purpose of receipt of the coded signal by the interrogator receiver.

The transponder, as is the componentry shown in the circuit diagram of Figure 2, is constructed as a monochip manufactured according to known monolithic techniques. Accordingly the microstripline element is fabricated utilising thick film techniques and located within the confines of a continuous earth shield and counterpoised against a ground plane connected in such a way that the principle mode of external radiation is between the top and bottom layer of the monostripline elements. The monochip and the electronics on the one hand and the ground plane and primary cell batteries on the other hand resonate as different plates of a disc capacitor at the RF frequency. This results in a good radiator of RF energy at UHF making long range interrogation possible.

In use, the transponder 10 (in say tag 50) is attached to the ear of an animal A. To interrogate the transponder the interrogator is directed toward the tag 50 and the pulsed infra-red light interrogation signal is sensed by the photodiode 11. This signal is amplified by amplifier 12 and passed through the signal conditioning circuitry. The interrogation pulse clocks monostable 25 which as described is arranged to cover a predetermined proportion of the clock period inhibiting noise which allows the transmitter to radiate a pulse of RF energy (or light). The digital word in the shift register is thus transmitted by transmitter 16 to be received by the tracking receiver 51.

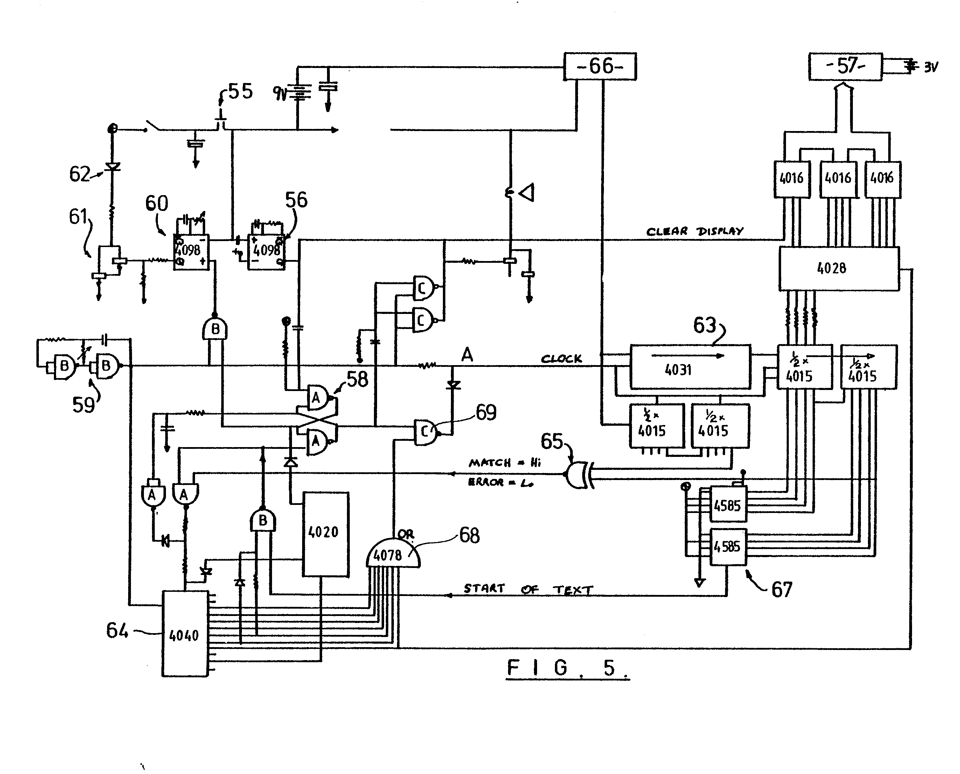

Referring now to Figure 5 typical wave forms are illustrated and have particular relevance to the second form of the transponder where the transponder 10 is shut down by a secondary pulse train. The interrogation signal wave form S1 as received by amplifier 12 incorporates the 5 KHz signal and the 10 KHz secondary signal. The interrogation signal S2 from the output of Schmitt comparator 23 is of square wave form and results in wave form S3 after passing through the monostable 25. Wave form S4 is the clocking pulses on line 29 for clocking of the shift register 14.

The analogue control input is shown by wave form S5 whilst the transmitter enable signal from the output of the buffer network 42 as shown as wave form S6. This illustrates that the transmitter is only enabled once a continuous stream of a determined number of input pulses are fed to comparator 40. The transmit enable wave form S6 shows that the transmitter shuts down once the 16 secondary pulses are counted through the binary counter 31. Wave form S7 illustrates the secondary pulses as applied to the counter 31

0073644

with wave form S8 showing the counter reset signal being input into the Schmitt inverter 33. Finally wave form S9 illustrates the output of the four input NAND gate 34 achieving transmitter shut down.

As will be realised the data from the shift register is synchronised with the interrogator bit by bit. In one form of interrogator the identification signal at the interrogator can pass through two binary serial to parallel shift registers 52 sequentially and their contents, at the instant both registers are loaded i.e. start and stop bits at each end, are compared. If found to be correct, the data word is passed to a controller processor 53. The controller processor is coupled as may be required to give a visual display, record the information, operate external equipment etc. Accordingly once the data word is captured it is used to commence either recording of information or other activities.

An alternative arrangement is to load a shift register to the total 80 bits of information and upon identification of the start bit compare the exiting information from the shift register to the incoming information (which is of course bit by bit the same information) giving an 80 bit check on the integrity of the data. A yet further technique is to use well documented checksum procedures to ascertain that the recovered data is in fact correct.

A portable interrogator is illustrated in Figure 5 and will be herein described as an example of a suitable interrogator. The interrogator componentry is located within a suitable housing which is mounted on a handle having a

0073644

trigger, said trigger being shown at 55 in Figure 5. The trigger when operated sets the monostable 56 which clears the display from LED display 57. Monostable 56 sets flip flop 58 and the setting of flip flop 58 starts clock 59. The clock 59 via monostable 60 initiates the strobe via darlington drive transistors 61 such that infra-red pulses emit from LED 62.

Clock 59 operates the shift register 63 and simulateously clocks counter 64 which is allowed to clock via exclusive OR gate 65 providing the incoming data is correlated bit by bit to the data exiting from the shift register. Incoming coded data is received via receiver circuitry indicated generally at 66 and this data is clocked into the shift register 63. After 80 bits have been received and counted by counter 64 for validity and the start of text code is in the shift register 63 and matched by the start of text comparator 67 the flip flop 58 is reset clearing the counter 64, stopping the strobe and clamp the clock line at A. Four bits at a time are then metered out of the shift register 63 by the action of counter 64 and NAND gate 68 via NAND gate 69 and thereby loads four bit binary coded decimal (BCD) into the display 57. Any code format can, however, be used.

Immediately the strobe is stopped the transponder is returned to its idling state because a continuous signal ceases to pass through R10 C10. Accordingly the transponder ceases to transmit a signal immediately the interrogator has received incoming data and verified that the data is correct.

The electronics of the transponder as described have been designed expressly for implementation in CMOS technology in a

0073644

single monolithic structure including both analogue and digital sections. The system thus uses infra-red as an interrogation medium and radio emmission in the UHF/microwave spectrum for transferring information from the transponder to the receiver incorporated in the interrogator. The operational circuit thus has low voltage and low current characteristics such that a unit can be achieved where the analogue pre-amplifiers jointly draw 12 microamps with the total digital componentry drawing in the nanoamps region and operating at low voltages such as below three volts. With the type of interrogator which has by way of example been described above interrogation ceases immediately the data from the transponder has been received and verified. This means, however, that if the strobed interrogation pulses are re-applied to the transponder the transponder will once again transmit its information. This unit is designed for hand held applications where automatic transponder shut down is not required. Where for example animals may be herded through a walkway into an enclosure, the second form of transponder is employed whereby a continuous interrogation signal indispersed with bursts of secondary pulses ensure that a transponder when interrogated and verified as having been correctly interrogated is specifically shut down and will not re-transmit until it has moved out of the scope of the interrogating pulses and is then re-subjected to interrogation.

The identification system according to the present invention is particularly suited for the identification either at close proximity or at long range of animals. However, it can equally be used in other applications. The system is open to modification as will be apparent to those skilled in the art. For example a requirement of the electronic identification of say inventory in a warehouse may require the writing of data into the transponder for storage or for ultra high integrity checks. This can be achieved with relative ease in the inventive system as the monostable circuitry 25 can be simply modified to detect data pulses interleaved into the main pulse stream.

The electronic identification system according to the invention provides a simple but effective means of electronically identifying objects such as animals. Identification can be made either at long or short distances which provides a very versatile system. For example with animal identification, interrogation can be carried out in the pasture or at close proximity when the animal is in say a walkway or drafting race. In such a short range application a low powered and cheap interrogator can be installed in the drafting race with light emitters situated at different heights on opposite sides of the race. By using narrow beams limited interrogation in a confined space can be achieved. This is an advantage not obtainable when using alternative mediums of interrogation.

The transponders can be economically manufactured and programmed after manufacture and testing. The versatility of the tag circuitry allows the identification signal to be transmitted in either light or RF energy. In addition high integrity can be achieved by utilising the verification signal without any increased complexity and cost in either the identification or interrogation units.

0073644

CLAIMS:

1. An electronic identification system comprising an identification unit and an interrogator unit, said interrogator unit including means for emitting light pulses and receiver means to receive a coded signal from said identification unit, and signal verification means to verify the coded signal from the identification unit has been correctly received, said identification unit including pulsed light detector means, signal processing means to convert said signal into clock pulses, storage means for storing an identifying code for said identification unit such that said code is synchronised out of said storage means by said clock pulses, transmitter means for transmitting a coded signal to said receiver means, interrogator signal verification means to verify the receipt of correct interrogation pulses and shut down means responsive to said signal verification means to shut down the identification unit once a verified interrogation signal ceases to be received by said identification unit.

2. An electronic identification system as claimed in claim 1 wherein the light is infra-red emitted as high powered short duration pulses.

3. The electronic identification system as claimed in claim 2 wherein the storage means is a single recirculating shift register.

4. An electronic identification system as claimed in any one of the preceding claims wherein the coded signal is transmitted by an ultra high frequency transmitter, there being means for supplying a DC component on which data information from the storage means is superimposed such as to effect deviation of the transmitter output to effect frequency modulation of the RF carrier in sympathy with coded data contained within the storage means.

5. An electronic identification system as claimed in any one of the preceding claims wherein the interrogator signal verification means is a capacitance resistance network feeding a comparator whereby the time constant of the capacitance resistance network is such that the comparator is only switched in the presence of a continuous stream of a predetermined number of valid clock pulses.

6. An electronic identification system as claimed in claim 5 further including a signal detector means which detects a secondary pulse signal from the interrogator.

7. An electronic identification system as claimed in claim 6 wherein the signal detector means includes a counter which counts a predetermined number of consecutive pulses accurately validating a shut down condition.

8. An electronic identification system as claimed in any one of the preceding claims wherein the identification unit includes a power source comprising a primary cell and a solar cell array.

9. An electronic identification system as claimed in claim 8 wherein the solar cell array is coupled to the primary cell to apply a float charge to the cell.

10. An electronic identification system as claimed in claim 1 wherein the coded signal is transmitted as a radio frquency transmission.

11.  An electronic identification system as claimed in any one of claims 4 to 10 wherein the transmitter is a single transistor free running UHF oscillator with its frequency controlled by a microstripline element.

12.  An electronic identification system as claimed in claim 11 wherein the microstripline element is located within the confines of a continuous earth shield and counterpoised against a ground plane connected such that the external radiation is between the top and bottom layer of the microstripline element.

13.  An identification unit for an electronic identification system comprising means to receive an interrogator signal of pulsed light, signal processing means to convert said signal into clock pulses, storage means for storing an identifying code such that said code is synchronised out of said storage means by said clock pulses, transmitter means for transmitting a coded signal, interrogator verification means to verify the receipt of correct interrogation pulses and shut down means responsive to said signal verification means to shut down the identification unit once a verified interrogation signal ceases to be received by said identification unit.

14.  An identification unit as claimed in claim 13 wherein the storage means is a single recirculating shift register from which data is clocked bit by bit by successive clock pulses.

15.  An identification unit as claimed in claim 13 or 14 further including a signal detector means to detect a secondary pulse signal from an interrogator unit, and including a binary counter to count a predetermined number of consecutive pulses accurately validating a shut down condition.

16. An identification unit as claimed in claim 15 wherein the signal processor includes a pulse separating flip flop held in reset mode by a monostable when the identification unit is in a shut down mode, said flip flop being clocked by said clock pulses prior to being enabled after setting of the monostable by said clock pulses.

17. An identification unit as claimed in claim 16 wherein the signal detector means includes N buffer means, which charges against the time constant of a resistance capacitance network, which is connected to comparator means to reset the binary counter in the presence of a pulse missing from the secondary pulse signal, said counter being clocked by the pulse separating flip flop.

18. An identification unit as claimed in claim 17 wherein the counter output is NANDED a NAND gate to reset a flip flop the output of which is NANDED via a second NAND gate in conjunction with the output of the interrogator signal verification means, the output of the second NAND gate being buffered by buffer means to enable the transmitter.

19. An identification unit as claimed in any one of claims 13 to 18 wherein the interrogator signal verification means is a capacitance resistance network feeding a comparator whereby the time constant of the capacitance resistance network is such that the comparator is only switched in the presence of a continuous stream of a predetermined number of valid clock pulses.

- 24 -

0073644

20. An identification unit as claimed in any one of claims 13 to 19 wherein the power source of the unit is a primary cell and solar cell array with the solar cell array coupled to the primary cell to apply a float charge to the primary cell.

F I G . 1.

00736044

0073644

F I G. 2

F I G . 3 .

0073644

3/5

STANDARD COMMUNICAT-
IONS PROTOCOL FOR
CONNECTION TO
ANCILLARY EQUIPMENT

11

50

51 → 52 → 52 → 53 → TELEPHONE MODEM

MASTITIS DETECTION

MILK METERING

BUTTERFAT TEST

OVULATION DETECTION

WEIGHING

ALERT OPERATOR FOR SPECIAL ACTION

FEED ALLOCATION ACCORDING TO NEED

ALERT OPERATOR TO MISSING ANIMALS

ORDINARY TELEPHONE LINES

HERD IMPROVEMENT OFFICE

DAIRY COOPERAT-IVE

HOME TERMINAL

BREEDING INFORMATION
PREGNANCY INFORMATION
PRODUCTION ANALYSIS
MANAGEMENT PROGRAMMES
FARM ACCOUNTS
FARM WAGES
CASH BOOK ANALYSIS
TAX SUPERVISION ETC.

FIG. 4.

0073644

FIG. 5.